# EUROPEAN PATENT APPLICATION

(11) **EP 2 091 043 A1**
(43) Date of publication of application: **19.08.2009**
(21) Application number: 08002225.4
(22) Date of filing: 07.02.2008
(51) Int. Cl.: G11B 7/26, G01N 21/956

(54) **A method for examining an optical stamper**

(71) Applicant: DPHI, Inc., Longmont, CO 80501 (US)
(72) Inventor: Steynor, James, Ross-on-Wye Heresfordshire HR9 6BZ (GB); Pohl, Peter, 6491 Mils bei Imst (AT)
(74) Representative: Torggler, Paul Norbert

(57) **Abstract**

A method for examining a pit structure of an optical stamper (6) comprising the following steps:
- copying the pit structure of the optical stamper (6) by applying or forming of at least one foil (7) on the pit structure of the optical stamper (6),
- removing the at least one foll (7) from the pit structure of the optical stamper (6)
- measuring the pit structure of the at least one foil (7).

## Description

The present invention relates to a method for examining surface properties, in particular a pit structure, of an optical stamper.

The production process of any optical disc consists of two distinct steps. In the first step, called mastering, the prototype of the optical medium, which is called optical stamper, has to be generated. These optical stampers are parts made of metal or glass or of plastics, which are produced and duplicated by means of exposure to light, etching, plasma etching, vacuum metallizing, partial evaporation, or electrochemically (galvanically). These and the end-products made from them (optical discs or replica, called finished discs in the following) contain mechanical structures ("pits" and "grooves", called pit structure in the following) which either themselves already represent the information that is to be read out (in the case of the prerecorded versions of these discs, the replicas), or else are guide or synchronization information for a subsequent writing process (in the case of the versions of these discs that are writeable once or repeatedly, such as e.g. CD-R or DVD-R). In the second step of the production process, the manufacturing process, the finished discs are produced by injection molding in a possibly large amount using the above optical stamper. Obviously, the accuracy of the optical stamper is of great importance. Hence prior to the manufacturing process, an examination of the surface properties, in particular of the pit structure, of an optical stamper in great detail is indispensable.

In prior art, the optical stamper is applied to a rotating support and then examined by a laser beam impinging from an optical head onto the signal face of the optical stamper. The laser beam is reflected and modulated by the shapes of the pits and grooves in the signal face of the optical stamper and, subsequently, analyzed with regard to the original beam. Since the phase difference between the reflected and the original beam depends on the length of the optical path between the optical head and the signal face of the optical stamper, the examination conditions are substantially different to the ones in the read-out process of the finished discs, in which several substrates on the reflection layer modify the wave length of the laser beam impinging from an optical head. To compensate this optical path length difference, US 6,635,896 suggests to affix a glass substrate through an UV hardening resin to the signal face of an optical stamper. A proper choice of this substrate medium circumvents the examination problems arising from the altered optical path when the optical stamper is examined, compared to the read-out process of finished discs.

An object of the present invention is to significantly reduce the duration of the examination process, whereat the assessment of the optical stamper quality is facilitated by providing examination results substantially equal to the results of the read-out process of finished discs.

To achieve the above objectives the present invention provides a method for examining surface properties, in particular of a pit structure, of an optical stamper characterised by the following steps:
- copying the pit structure of the optical stamper by applying or forming of at least one foil on the pit structure of the optical stamper,
- removing the at least one foil from the pit structure of the optical stamper measuring the pit structure of the at least one foil.

The method of the present invention realizes that by copying a pit structure of an optical stamper to at least one foil and additionally or alternatively to a layer of adhesive, a measurement procedure independently of the optical stamper is possible. This opens up the possibility of a significant reduction of the time, necessary for an examination of the pit structure of an optical stamper, by examining a substantially 1:1 copy of this pit structure on a foil, which could comprise a layer of adhesive. In a preferred embodiment of the invention, the stamper has to be rotated in the examination procedure. Since the foil can have much less weight than the metallic optical stamper, it can be rotated at a much higher frequency than the optical stamper, providing a much faster examination. Furthermore, several substantially identical copies of the pit structure of an optical stamper can be fabricated and examined simultaneously, which also drastically reduces the examination time by a factor given by the number of substantially identical copies.

A proper choice of the material of the foil in addition with further possibly available elements for modifying the length of the optical path provides substantially equal results as in the read-out process of finished optical discs.

The method of the present invention is applicable to all kinds of optical discs, for instance CD, DVD, HD DVD, blue ray disc and the like, with all possible formats, e.g. video, audio, ROM and the like, as well as in single layer or multi-layer format.

Furthermore, the method of the present invention is applicable to all possible recordable optical discs, for instance CD-R, CD-RW, DVD-R, DVD-RW, DVD+R DVD+RW, HD DVD-R, HD DVD-RW, blue ray disc-R, blue ray disc-RE and the like; as well as in single layer and in multi-layer format

Further preferred embodiments of the present invention are discussed below.

In a particularly preferred embodiment of the invention, the foil, which could comprise a flexible material is applied to the pit structure of the optical stamper. Although the foil may be flexible, in a preferred embodiment of the invention it is made from a preformed body and has a pre-shaped form. Thus, by impressing the foil onto the pit structure of an optical stamper, this pit structure is copied to the foil. Nevertheless, one could also apply a liquid-like substance, for instance by spraying, onto the pit structure, where a copy of a pit structure of an optical stamper is created by a drying process of the liquid-like substance, thereby forming a foil. It will be appreciated, that the foil is removed from the optical stamper, before the measurement of the pit structure of the foil starts.

In an embodiment of the present invention, the pit structure of the optical stamper is embossed to a foil during the application of the foil to the optical stamper. In a particular embodiment of the present invention, the application of the foil to the pit structure of the optical stamper could comprise a pressure sensitive adhesive embossing process. In this embodiment of the invention a bond between the foil and the optical stamper can be provided without additional adhesives. Due to this bond the pit structure of the optical stamper is copied very accurately to the foil. Since no additional adhesives are necessary, the foil can simply be removed by mechanical means.

In a particularly preferred embodiment of the present invention, the foil further comprises a layer of adhesive, which is applied to the signal face of the optical stamper. It will be appreciated that in this embodiment of the invention, the pit structure of the optical stamper is copied to the layer of adhesive. It could further be advantageous that the pit structure of the optical stamper is embossed to the layer of adhesive.

It could further be advantageous that the foil comprises a hard coat, on the side opposing the side of the foil where the pit structure of the optical stamper is copied on or the layer of adhesive, containing a copy of the pit structure of the optical stamper. This hard coat has the function to protect the coat from mechanical damages like scratches and the like. This hard coat preferably comprises a material with a high hardness.

In a particular example of the embodiment of the present invention, the foil comprises a layer of polycarbonate with a thickness between 70 µm and 85 µm, a layer of adhesive, curable by UV radiation, with a thickness between 5 µm and 25 µm and a hard coat with a thickness between 1 µm and 10 µm. In this particular example the total thickness of the foil is between 70 µm and 120 µm and all of the layers mentioned above have an index of refraction of substantially 1.5.

In order to remove the foil including the layer of adhesive containing the copy of the pit structure of the optical stamper, it could be necessary to cure the layer of adhesive before the foil and the layer of adhesive are removed. In a particularly preferred embodiment of the invention, the layer of adhesive comprises of adhesives which harden upon UV radiation. Hence, the curing process in this embodiment of the invention is effected by irradiating UV radiation onto the layer of adhesive.

After the foil, which could comprise a layer of adhesive and a hard coat, has been removed from the optical stamper, its pit structure, corresponding to the pit structure of the optical stamper is examined. It could be advantageous that a reflection layer is applied to the foil, which could comprise a layer of adhesive, after they have been removed from the optical stamper. Since the reflection layer is very thin, it does not fill out the pits and grooves of the pit structure, but nestles to the copy of the pit structure in the foil or the layer of adhesive and thus following this copy of the pit structure. Thus it could also be possible that the reflection layer lies between the foil and the layer of adhesive and is applied to the foil with an additional layer of adhesive before it is applied to the pit structure of the optical stamper.

In the examination process of a particularly preferred embodiment of the invention, the foil, which could comprise a layer of adhesive, a hard coat and also a reflection layer, is applied to a revolving support. An optical head which could be movable irradiates a laser beam onto the foil, which could comprise a hard coat, a layer of adhesive and a reflection layer. Upon reflection and phase modulation of the laser beam by the pits and grooves of the pit structure, the signal is analyzed with regard to the original laser beam in an examination unit. For example this reflection layer could have a thickness between 15 µm and 35 µm.

Nevertheless, a small part of the laser radiation is also reflected at the transition between the foil and the surrounding air or at the transition between the layer of adhesive and the surrounding air. Thus, it will be appreciated that in the method of the present invention the necessary reflection and phase modulation of the laser beam by the pits and grooves of the pit structure works also without an additional layer of reflection.

Since the foil, which could comprise a layer of adhesive, a hard coat any a reflection layer, has much less weight than the optical stamper, it can be rotated at a much higher speed, allowing for a significantly reduced examination time, according to the objectives of the present invention.

In this examination process a further modification of the optical path could be necessary. This could be effected by applying a transparent layer, for instance a glass plate of proper optical density and thickness, between the foil and the optical head. In a preferred embodiment of the invention, this transparent layer could rotate with the foil, for instance by adhering it to the foil. It could also be advantageous that this transparent layer is separated from the foil and kept between the optical head and the foil, during the measurement process.

The thickness of this transparent layer which rotates with the foil or is kept between the foil and the optical head in the examination process depends on the kind of optical discs going to be produced with the optical stamper. In the case of CDs the transparent layer could comprise a glass plate having a thickness between 1 mm and 2 mm, preferably between 1 mm and 1.5 mm. In the case of DVDs or HD DVDs the transparent layer could comprise a glass plate having a thickness between 0.1 mm and 1 mm, preferably between 0.2 mm and 0.8 mm.

Further advantages and details of the invention will be apparent by reference to the specific description and the accompanying figures in which:
- Fig. 1: is a diagrammatic representation of the setup for the examination process in a preferred embodiment of the invention,
- Fig. 2a, 2b: show the top and the bottom side, respectively, of the foil in a particularly preferred embodiment of the invention,
- Fig. 3a-3f: show the steps of the method of the present invention in a particularly preferred embodiment,

- Fig.4: diagrammatically shows the examination process in a preferred embodiment of the method of the present invention,
- Fig. 5a, 5b: show an embodiment of the present invention in which the optical path is modified by using a transparent layer between the at least one foil and the optical head.

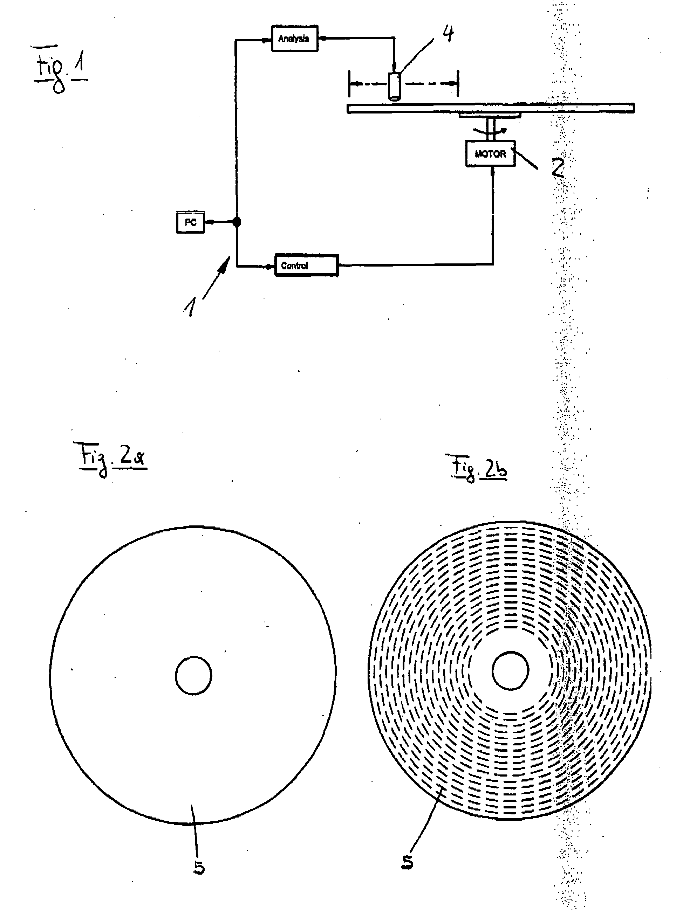

Fig. 1 diagrammatically shows the setup for examining the foil, possibly containing a layer of adhesive and a reflection layer. A motor 2 rotates a support 3 to which the foil, which could comprise a layer of adhesive and a reflection layer, is applied. An optical head 4 moves along the radial direction of the support and radiates a laser beam onto its surface. The reflected laser beam is analyzed with regard to the original beam in an examination unit 1.

Fig. 2a shows the plain top side of a foil 5 for optical discs in a preferred embodiment of the invention after said foil 5 has been removed from the optical stamper 6 Fig. 2b shows the pit structure of foil 5 which corresponds to the pit structure of the optical stamper 6 on the bottom side of foil 5 in a preferred embodiment of the method of the present invention.

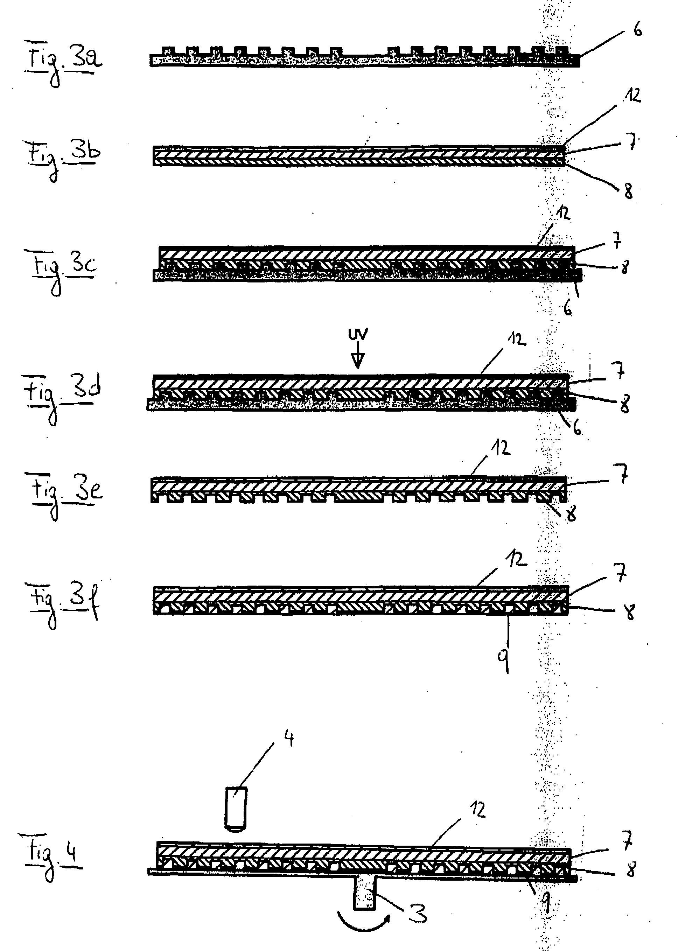

Fig. 3a-3f show the steps of a particularly preferred embodiment of the method of the present invention. Fig. 3a shows the optical stamper 6. Fig. 3b shows a foil 7 to which a layer of adhesive 8 and a hard coat 12 has been applied. In Fig. 3c the foil 7, the hard coat 12 and the layer of adhesive 8 is applied to the optical stamper 6. The layer of adhesive 8 is cured by means of UV radiation as shown in Fig. 3d. Fig. 3e shows the pit structure in the layer of adhesive 8 which corresponds to the pit structure of the optical stamper 6 after the layer of adhesive 8, the hard coat 12 and the foil 7 have been removed from the optical stamper 6. In Fig. 3f a reflection layer 9 is applied to the foil 7, the hard coat 12 and the layer of adhesive 8.

Fig. 4 shows diagrammatically the examination process in a particularly preferred embodiment of the method of the present invention. The foil 7, the hard coat 12, the layer of adhesive 8 and the reflection layer 9 are applied to a revolving support 3 and examined by means of an optical head 4.

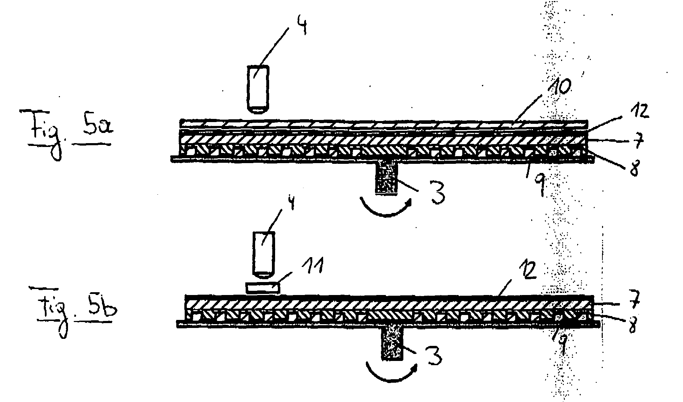

Fig. 5a shows an embodiment of the method of the present invention in which a transparent layer 10 is applied to the foil 7 between the foil 7 and the optical head 4 and rotates together with the foil 7. Fig. 5b shows another embodiment of the method of the present invention in which the modification of the optical path is realized by a non-rotating transparent layer 11, which is kept between the optical head 4 and the foil 7.

## Claims

1. A method for examining a pit structure of an optical stamper (6) **characterised by** the following steps:
- copying the pit structure of the optical stamper (6) by applying or forming of at least one foil (7) on the pit structure of the optical stamper (6),
- removing the at least one foil (7) from the pit structure of the optical stamper (6)
- measuring the pit structure of the at least one foil (7).

2. The method of claim 1, wherein the at least one foil (7) comprises a flexible material.

3. The method of claim 1 or 2, wherein the at least one foil (7) comprises polycarbonate.

4. The method of one of the claims 1 to 3, wherein the at least one foil has a thickness between 50 µm and 150 µm, preferably between 75 µm and 125 µm.

5. The method of one of the claims 1 to 4, wherein the pit structure of the optical stamper (6) is embossed to the at least one foil (7).

6. The method of one of the claims 1 to 5, wherein the pit structure of the optical stamper (6) is embossed to the at least one foil (7) using a pressure-sensitive adhesive embossing process.

7. The method of one of the claims 1 to 6, wherein the at least one foil (7) comprises a layer of adhesive (8), which is applied to the pit structure of the optical stamper (6).

8. The method of claim 7, wherein the pit structure of the optical stamper (6) is embossed to the layer of adhesive (8).

9. The method of claim 7 or 8, wherein the layer of adhesive has a thickness between 5 µm and 30 µm, preferably between 10 µm and 25 µm.

10. The method of one of the claims 7 to 9, wherein the layer of adhesive (8) is cured before the at least one foil (7) is removed from the optical stamper (6).

11. The method of claim 10, wherein the layer of adhesive (8) is cured using UV radiation before the at least one foil (7) is removed from the optical stamper (6).

12. The method of one of the claims 1 to 11, wherein the at least one foil (7) comprises a hard coat (12), on the side of the at least one foil (7) remote from the pit structure of the at least one foil (7).

13. The method of claim 12, wherein the hard coat (12) has a thickness between 0.5 µm and 10 µm, preferably between 1 µm and 7 µm.

14. The method of one of the claims 1 to 13, wherein the at least one foil (7) and/or the layer of adhesive (8) and/or the hard coat (12) have an index of refraction of substantially 1.5.

15. The method of one of the claims 1 to 14, wherein at least one reflection layer (9) is applied to the at least one foil (7) and/or the at least one layer of adhesive (8).

16. The method of claim 15, wherein the at least one reflection layer (9) has a thickness between 5 µm and 50 µm, preferably between 15 µm and 35 µm.

17. The method of one of the claims 1 to 16, wherein a transparent layer (10) is applied to the at least one foil (7).

18. The method of one of the claims 1 to 17, wherein a transparent layer (11) is kept between the at least one foil (7) and an optical head (4) during the measurement of the pit structure of the at least one foil (7).

19. The method of claim 17 or 18, wherein the transparent layer (10) and/or the transparent layer (11) comprises a glass plate with a thickness between 1 mm and 2 mm, preferably between 1 and 1.5 mm.

20. The method of claim 17 or 18, wherein the transparent layer (10) and/or the transparent layer (11) comprises a glass plate with a thickness between 0.1 mm and 1 mm, preferably between 0.2 mm and 0.8 mm.

21. A method for producing a test specimen to be used for examining a pit structure of an optical stamper (6) preferably in a method according to one of the claims 1 to 13 comprising the following steps:
- copying the pit structure of the optical stamper (6) by applying or forming of at least one foil (7) on the pit structure of the optical stamper (6),
- removing the at least one foil (7) from the pit structure of the optical stamper (6).

22. The method of claim 21, wherein the at least one foil (7) comprises of flexible material.

23. The method of claim 21 or 22, wherein the at least one foil (7) comprises a layer of adhesive (8).

24. The method of one of the claims 21 to 23, wherein the at least one foil (7) comprises a hard coat (12), on the side of the at least one foil (7) opposing the pit structure of the at least one foil (7).

25. The method of one of the claims 21 to 24, wherein the at least one foil (7) comprises a reflection layer (9).

26. The method of one of the claims 21 to 25, wherein the at least one foil (7) comprises a transparent layer (10).
